# EUROPÄISCHE PATENTANMELDUNG

(11) **EP 3 858 199 A1**
(43) Veröffentlichungstag der Anmeldung: **04.08.2021**
(21) Anmeldenummer: 20154494.7
(22) Anmeldetag: 30.01.2020
(51) Int. Cl.: A47J 27/00, A47J 36/32, A47J 43/046, A47J 44/00

(54) **SYSTEM MIT KÜCHENGERÄTEN FÜR EIN KOORDINIERTES KOCHEN UND VERFAHREN**

(71) Anmelder: Vorwerk & Co. Interholding GmbH, 42270 Wuppertal (DE)
(72) Erfinder: Stein, Matthias, 45472 Mühlheim an der Ruhr (DE); Rogge, Marian, 40627 Düsseldorf (DE)
(74) Vertreter: Gille Hrabal Partnerschaftsgesellschaft mbB Patentanwälte

(57) **Zusammenfassung**

Die Erfindung betrifft ein System mit zumindest zwei Küchengeräten (1, 12, 13, 14); einer elektronische Ressourcen - Speichereinrichtung (16) für ein Speichern einer Liste mit Küchengeräten, die das System umfasst, und/oder für ein Speichern der Zahl der Benutzer, die für eine Zubereitung von ein oder mehreren Speisen zur Verfügung stehen; einer Rezept - Speichereinrichtung (17) für ein Speichern eines Rezeptes für die Zubereitung einer Speise; eine Optimierungseinrichtung (18), die so eingerichtet ist, dass diese die Zubereitung von ein oder mehreren Speisen optimiert und zwar unter Berücksichtigung von Informationen für das System, die ein Rezept umfasst; eine Steuereinrichtung (19) für eine Zubereitung von ein oder mehreren Speisen gemäß einer durch die Optimierungseinrichtung optimierten Prozessschrittreihenfolge. Die Erfindung betrifft außerdem ein Verfahren zur Herstellung einer Speise mit dem System.

## Beschreibung

Die Erfindung betrifft eine Zubereitung von Speisen mit Küchengeräten gemäß Rezept und zwar sowohl ein System als auch ein Verfahren.

Aus dem Stand der Technik ist eine Küchenmaschine Thermomix® TM6 für eine Zubereitung einer Speise gemäß Rezept im Sinne der vorliegenden Erfindung bekannt. Die Küchenmaschine Thermomix® umfasst ein Gefäß mit einem darin befindlichen Rühr- und Schneidwerkzeug, eine Waage für ein Wiegen einer in das Gefäß eingefüllten Zutat, eine Heizeinrichtung für ein Erhitzen des Gefäßes und eine Steuereinrichtung für ein Steuern der Küchenmaschine. Die Küchenmaschine Thermomix® erlaubt das Einstellen einer Drehgeschwindigkeit des Rühr- und Schneidwerkzeugs, das Einstellen einer Drehrichtung des Rühr- und Schneidwerkzeugs, das Einstellen einer gewünschten Temperatur in dem Gefäß, das Einstellen einer Zeit für das Drehen des Rühr- und Schneidwerkzeugs mit einer gewünschten Geschwindigkeit sowie für das Erhitzen. Ein Rühr- und Schneidwerkzeug im Sinne der vorliegenden Erfindung kann über eine stumpfe Kante und eine gegenüberliegende scharfe Kante verfügen. Ein Benutzer kann mithilfe dieser Küchenmaschine eine Speise gemäß einem Thermomix® - Rezept besonders zuverlässig zubereiten, weil Thermomix® - Rezepte Schritt-für-Schritt - Anleitungen enthalten, welche Schritte des Rezeptes mit welchen Einstellungen bei der Küchenmaschine Thermomix® gemäß welcher Reihenfolge vorzunehmen sind. Einstellungen können im Rahmen der Zubereitung einer Speise sogar teilautomatisiert vorgenommen werden. Der Benutzer erhält durch ein Thermomix®-Rezept also zu gegebener Zeit genaue Anweisungen, welche Zutaten mit welchen Mengen mit welchen Einstellungen zu verarbeiten sind. Es können also durch ein Thermomix® - Rezept Drehgeschwindigkeit des Rühr- und Schneidwerkzeugs, Drehrichtung des Rühr- und Schneidwerkzeugs, Zeitdauer sowie ggfs. einzustellende Temperatur exakt vorgegeben sein. Die Küchenmaschine Thermomix® verfügt über ein Display, auf dem auszuführende Schritte eines Rezepts einschließlich vorzunehmender Einstellungen nacheinander dargestellt werden können. Dadurch wird es selbst für ungeübte Benutzer möglich, eine Speise reproduzierbar zuzubereiten. Weitere Informationen und Einzelheiten sind dem USER MANUAL der Küchenmaschine Thermomix® TM6 zu entnehmen.

Ein Küchengerät und zwar ein Rührgerät, welches ein Gefäß und ein Rührwerkzeug umfasst, ist aus der Druckschrift DE 10 2009 016 897 A1 bekannt. Das Rührwerkzeug ist in ein Aufsatzteil für das Gefäß integriert. Das Aufsatzteil umfasst als Antrieb einen Piezo-Schrittmotor. Ein Piezo-Schrittmotor ermöglicht im Vergleich zur Küchenmaschine Thermomix® TM6 nur geringe Drehgeschwindigkeiten und auch nur geringe Drehmomente.

Ein Rührgerät im Sinne der vorliegenden Erfindung ist ein Küchengerät mit einem Gefäß und einem darin befindlichen Rührwerkzeug, welches im Vergleich zur Küchenmaschine Thermomix® TM6 mit nur geringer Geschwindigkeit und einem geringen Drehmoment gedreht werden kann. Insbesondere ist ein solches Rührgerät aufgrund des geringen Drehmoments nicht geeignet, um Teig zu kneten. Als Rührwerkzeug kann in einem Rührgerät auch ein Rühr- und Schneidwerkzeug eingesetzt sein, das über eine stumpfe Kante und eine gegenüberliegende scharfe Kante verfügt. Dieses kann dann auch bei einer Küchenmaschine für ein Zerkleinern von Zutaten eingesetzt werden. In einem solchen Fall kann das Rührgerät das Rührwerkzeug vorzugsweise nur in Richtung seiner stumpfen Kante drehen. Da der Funktionsumfang eines Rührgeräts im Vergleich zum Funktionsumfang einer Küchenmaschine gering ist, ist sein Bauraum grundsätzlich klein im Vergleich zum Bauraum einer Küchenmaschine.

Aus dem Stand der Technik ist ein Mixer Vitamix Pro 750 bekannt, dessen Bauraum ebenfalls gering im Vergleich zum Bauraum einer üblichen Küchenmaschine ist. Im Unterschied zum Rührgerät ist ein solcher Mixer für ein Zerkleinern von Zutaten eingerichtet. Ein solcher Mixer verfügt daher über ein Schneidwerkzeug, welches mit hoher Geschwindigkeit in Richtung seiner scharfen Kante gedreht werden kann, um beispielsweise Früchte für die Herstellung eines Fruchtgetränks zerkleinern zu können.

Ein Mixer im Sinne der vorliegenden Erfindung ist also ein Küchengerät mit einem Gefäß und einem Schneidwerkzeug. Da der Funktionsumfang eines Mixers im Vergleich zum Funktionsumfang einer Küchenmaschine gering ist, ist sein Bauraum grundsätzlich klein im Vergleich zum Bauraum einer Küchenmaschine.

Es ist Aufgabe der Erfindung, das Zubereiten einer Speise weiter zu erleichtern.

Zur Lösung der Aufgabe dient ein System mit zumindest zwei Küchengeräten. Ein Küchengerät ist ein Gerät, mit dessen Hilfe eine Speise zubereitet werden kann. Der Begriff Speise umfasst auch eine flüssige Speise, also auch eine Suppe oder ein Getränk. Ein Küchengerät kann beispielsweise eine Küchenmaschine, ein Rührgerät, ein Backofen, eine Mikrowelle, ein Wasserkocher, eine Kochstelle mit Bratpfanne oder mit Kochtopf, ein Dampfgarer, ein Mixer, ein Kühlschrank oder ein Gefrierschrank sein.

Das System umfasst eine elektronische Ressourcen - Speichereinrichtung für ein Speichern einer Liste mit Küchengeräten, die das System umfasst, und/oder für ein Speichern der Zahl der Benutzer, die für eine Zubereitung von ein oder mehreren Speisen zur Verfügung stehen. In der elektronischen Ressourcen - Speichereinrichtung kann beispielsweise gespeichert sein, dass das System eine Küchenmaschine und ein Rührgerät umfasst. Das System umfasst dann die Küchenmaschine und das Rührgerät als Küchengeräte. In der elektronischen Ressourcen - Speichereinrichtung kann beispielsweise gespeichert sein, dass zwei Benutzer vorhanden sind. Dann können also manuelle Tätigkeiten von zwei verschiedenen Personen durchgeführt werden.

Das System umfasst eine elektronische Rezept - Speichereinrichtung für ein Speichern eines Rezeptes für die Zubereitung einer Speise. In der Speichereinrichtung kann also ein Rezept, also eine planmäßige Anweisung zur Zubereitung der Speise, gespeichert sein.

Ein Rezept ist erfindungsgemäß in eine Mehrzahl von Prozessschritten unterteilt. Ein Prozessschritt ist ein Schritt, der für die Zubereitung einer Speise durchgeführt werden muss. Beispielsweise ist gemäß dem Rezept vorgesehen, dass Parmesankäse durch eine Küchenmaschine oder einen Mixer zerkleinert werden soll. Das Rezept kann dann die folgenden Prozessschritte umfassen.
- erster Prozessschritt: Parmesan in das Gefäß der Küchenmaschine oder des Mixers geben;
- zweiter Prozessschritt: Deckel auf das Gefäß aufsetzen;
- dritter Prozessschritt: Parmesan im Gefäß 10 Sekunden lang mit maximaler Drehgeschwindigkeit zerkleinern.

Prozessschritt meint also eine einzelne, zusammenhängende Tätigkeit eines Benutzers oder eines Küchengeräts, die sich grundsätzlich nicht mehr weiter unterteilen lässt.

Das Rezept enthält für jeden Prozessschritt Informationen für das System, die von dem System ausgewertet werden können.

Eine Information für das System bedeutet, dass dem System die Information so zur Verfügung steht, dass das System die zur Verfügung stehende Information verarbeiten und dadurch eine Anleitung zur Zubereitung einer Speise optimieren kann. Eine Information für das System liegt nicht vor, wenn zwar ein Benutzer eine Information erhalten und verstehen kann, diese Information aber nicht in einer Form vorliegt, die das System "verstehen" kann, um die Information für Optimierungsberechnungen nutzen zu können.

Die Informationen können eine Zeitangabe für einen Prozessschritt umfassen, d. h., die Zeit, die für die Durchführung des Prozessschrittes benötigt wird. Insbesondere kann es für jeden Prozessschritt eines Rezeptes eine Zeitangabe geben. Das Rezept enthält beispielsweise für das System die Information, dass für den zuvor genannten ersten Prozessschritt 10 Sekunden Zeit, für den zuvor genannten zweiten Prozessschritt 5 Sekunden Zeit und für den zuvor genannten dritten Prozessschritt 15 Sekunden Zeit benötigt werden. Für den dritten Prozessschritt können beispielsweise 15 Sekunden (und nicht lediglich 10 Sekunden) vorgesehen sein, weil dieser umfasst, dass in einem Arbeitsschritt des Küchengeräts der aufgesetzte Deckel vor dem Zerkleinern durch das Küchengerät automatisiert verriegelt wird und im Anschluss an das Zerkleinern automatisiert entriegelt und dazwischen automatisiert zerkleinert wird.

Die Informationen können für einen Prozessschritt eine Angabe umfassen, welches Küchengerät für die Durchführung des Prozessschritts benötigt wird. Für einen Prozessschritt können auch zwei und mehr Küchengeräte zur Auswahl gestellt sein.

Für jeden der zuvor genannten drei Prozessschritte kann das Rezept daher die Angabe umfassen, dass eine Küchenmaschine oder ein Mixer benötigt werden.

Die Informationen können für einen Prozessschritt die Angabe umfassen, dass für die Durchführung ein Benutzer benötigt wird. So können der erste und der zweite zuvor genannte Prozessschritt die Angabe umfassen, dass der Benutzer benötigt wird, weil "Parmesan in das Gefäß der Küchenmaschine oder des Mixers geben" sowie das Aufsetzen eines Deckels eine manuelle Tätigkeit eines Benutzers erfordern. "Zwiebeln schälen" ist ein anderes Beispiel für einen Prozessschritt, für den die Angabe vorgesehen sein kann, dass dieser Prozessschritt durch einen Benutzer des Systems auszuführen ist. Zwiebeln schälen ist ein Beispiel für einen Prozessschritt, für dessen Ausführung kein Küchengerät eingesetzt wird.

Die Informationen können umfassen, dass ein Prozessschritt von einem anderen Prozessschritt abhängig ist. Damit ist gemeint, dass der erstgenannte Prozessschritt nur ausgeführt werden kann, nachdem der andere Prozessschritt ausgeführt worden ist. Das Rezept kann also für das System die Information enthalten, dass der zuvor genannte dritte Prozessschritt von dem zweiten Prozessschritt abhängt. Das Rezept kann für das System die Information enthalten, dass der zuvor genannte zweite Prozessschritt von dem zuvor genannten ersten Prozessschritt abhängt.

Das System umfasst eine Optimierungseinrichtung, die so eingerichtet ist, dass diese die Zubereitung von ein oder mehreren Speisen optimiert und zwar unter Berücksichtigung der Informationen für das System. Damit ist gemeint, dass die Optimierungseinrichtung aufgrund der Informationen die Reihenfolge von Prozessschritten ändern kann oder zumindest die Prozessschritte von zwei Rezepten miteinander kombinieren kann, so dass eine neue Reihenfolge von Prozessschritten entsteht, durch das ein vorgegebenes Ziel erreicht wird. Beispielsweise umfasst ein erstes Rezept drei Prozessschritte R11, R12, R13 und zweites Rezept drei Prozessschritte R21, R22 und R23, die jeweils laut Rezept in dieser Reihenfolge auszuführen sind. Als Ziel ist vorgegeben, dass die beiden Speisen so schnell wie möglich fertiggestellt sein sollen. Die Optimierungseinrichtung berechnet nun, durch welche Reihenfolge der Prozessschritte die beiden Speisen so schnell wie möglich zubereitet werden können. Die Optimierungseinrichtung nutzt für die Berechnung dann die für das System bereitgestellten Informationen. Beispielsweise kann die Berechnung ergeben haben, dass die Prozessschritte in folgender Reihenfolge durchzuführen sind, um beide Speisen in kürzester Zeit zuzubereiten: R22, R21, R11, R12, R23, R13. Die Optimierungseinrichtung hat also die durch die beiden Rezepte vorgesehenen Reihenfolgen geändert und aus den beiden Reihenfolgen eine einzige neue Reihenfolge erstellt, wodurch ein gewünschtes Optimierungsziel erreicht wurde. Es steht so eine Prozessschritt-für-Prozessschritt - Anleitung zur Verfügung, gemäß der auch eine Mehrzahl von Speisen zubereitet werden können. Dies geschieht in einer optimierten Weise gemäß einem ausgewählten Optimierungsziel.

Das System umfasst eine Steuereinrichtung für eine Zubereitung von ein oder mehreren Speisen gemäß einer optimierten Prozessschrittreihenfolge, die durch die Optimierungseinrichtung erstellt wurde. Die Steuereinrichtung ist so eingerichtet, dass diese die ein oder mehreren Benutzer anleitet, welche Prozessschritte in welcher Reihenfolge wie durchzuführen sind und wie ggfs. welche Küchengeräte für die Speisenzubereitung auszuwählen und wie diese einzustellen sind. Die Steuereinrichtung kann auch so eingerichtet sein, dass diese Einstellungen bei Küchengeräten automatisiert vornimmt. So kann das System einen Bildschirm umfassen, auf dem angezeigt wird, dass ein Benutzer gemäß dem Prozessschritt R22 zwei Esslöffel Öl in das Gefäß einer Küchenmaschine füllen soll. Gemäß dem sich daran anschließenden Prozessschritt R21 soll der Benutzer zwei Zwiebeln schälen. Gemäß einem sich daran anschließenden Prozessschritt R11 soll eine Kochstelle mit einer darauf befindlichen Bratpfanne erhitzt werden. Der Benutzer wird dann beispielsweise über einen Bildschirm aufgefordert, die Ausführung des Prozessschrittes zu bestätigen, so zum Beispiel durch Berühren eines angezeigten Feldes auf dem dann berührungsempfindlichen Bildschirm. Hat der Benutzer das Feld berührt, so stellt die Steuereinrichtung automatisch eine vorgesehene Temperatur ein, auf welches das Kochfeld dann erhitzt wird. Alternativ kann der Benutzer über den Bildschirm aufgefordert werden, eine auf dem Display angezeigte Temperatur manuell einzustellen. Es kann dafür beispielsweise ein Drehregler vorgesehen sein, bei dem durch Drehen eine gewünschte Temperatur eingestellt werden kann. Es kann dafür auf dem dann berührungsempfindlichen Bildschirm ein Eingabefeld für eine gewünschte Temperatur vorgesehen sein.

Das System ermöglicht es, eine Zubereitung von mehreren Speisen gemäß Rezept optimiert durchzuführen und zwar unter Berücksichtigung der zur Verfügung stehenden Ressourcen, das heißt, der zur Verfügung stehenden Küchengeräte und/ oder der Anzahl an Benutzer, die für die Durchführung von manuellen Tätigkeiten zur Verfügung stehen. Dies gilt vor allem für den Fall, dass eine Mehrzahl von Speisen parallel zubereitet werden sollen und zwar unter Einsatz von mehr als einem Küchengerät. Durch das Rezept bzw. die Rezepte stehen der Optimierungseinrichtung die benötigten Informationen zur Verfügung, um eine Speise bzw. eine Mehrzahl an Speisen beispielsweise parallel sowie beispielsweise zeitlich optimiert herstellen zu können und zwar in angeleiteter Form. Eine Prozessschritt für Prozessschritt - Anleitung für die Zubereitung einer Speise kann über einen Bildschirm erfolgen. Alternativ oder ergänzend kann eine Sprachausgabe über einen Lautsprecher des Systems vorgesehen sein, um einen Benutzer anzuleiten. Eine Prozessschritt für Prozessschritt - Anleitung muss nicht so ausgegeben werden, dass ein jeder Prozessschritt vollständig ausgegeben wird. Die Ausgabe kann auf das beschränkt sein, was für die Zubereitung einer Speise für einen Benutzer erforderlich ist. So umfasst die Ausgabe grundsätzlich keine Informationen zu Abhängigkeiten.

Die Optimierungseinrichtung kann in einer Ausgestaltung der Erfindung im Rahmen einer Optimierung auch berücksichtigen, dass für die Ausführung eines Prozessschritts zumindest zwei verschiedene Küchengeräte verwendet werden können. Bei dieser Ausgestaltung kann die Optimierungseinrichtung Küchengeräte aus den in der Ressourcen - Speichereinrichtung gespeicherten Küchengeräten so auswählen, dass durch diese Auswahl das gewünschte Optimierungsziel erreicht wird. Beispielsweise berechnet die Optimierungseinrichtung die Geschwindigkeit der Zubereitung von ein oder mehreren Speisen für den Fall, dass ein gemäß Prozessschritt vorgesehenes Rühren durch eine vorhandene Küchenmaschine, also ein in der elektronischen Ressourcen - Speichereinrichtung gespeicherte Küchenmaschine, durchgeführt wird und zum anderen durch ein vorhandenes Rührgerät, wenn ein oder mehrere Speisen so schnell wie möglich zubereitet werden sollen.

Die Optimierungseinrichtung kann eine Eingabeeinrichtung umfassen, durch die ein gewünschtes Optimierungsziel eingegeben und damit vorgegeben werden kann. Es kann beispielsweise als Optimierungsziel mittels der Eingabeeinrichtung vorgegeben werden, dass ausgewählte Speisen zeitgleich fertig gestellt werden sollen und außerdem so schnell wie möglich. Die Steuerungseinrichtung kann dann im Anschluss an eine solche Optimierung die Zubereitung der Speisen so steuern und einen oder mehrere Benutzer entsprechend anleiten, dass die Speisen in kürzest möglicher Zeit parallel so hergestellt werden, dass die Speisen zeitgleich fertig gestellt werden. Es kann beispielsweise als Optimierungsziel mittels der Eingabeeinrichtung vorgegeben werden, dass ausgewählte Speisen so fertig gestellt werden sollen, dass die Zahl der verwendeten Küchengeräte minimiert wird. Die Steuerungseinrichtung kann dann im Anschluss an eine solche Optimierung die Zubereitung der Speisen so steuern und einen oder mehrere Benutzer entsprechend anleiten, dass die ausgewählten Speisen so hergestellt werden, dass die Zahl der dafür benötigten Küchengeräte so gering wie möglich ist. Es kann beispielsweise als Optimierungsziel mittels der Eingabeeinrichtung vorgeben sein, dass eine erste Speise zu einem ersten Zeitpunkt und eine zweite Speise zeitlich später fertiggestellt werden soll, so zum Beispiel 30 Minuten später. Die Steuerungseinrichtung kann dann im Anschluss an eine solche Optimierung die Zubereitung der Speisen so steuern und einen oder mehrere Benutzer entsprechend anleiten, dass die eine Speise zu einem ersten Zeitpunkt und die andere Speise zu einem gewünscht späteren Zeitpunkt zubereitet wird. Es kann beispielsweise als Optimierungsziel vorgegeben sein, dass eine erste Speise zu einem ersten Zeitpunkt fertig gestellt werden soll und eine zweite Speise zu einem späteren Zeitpunkt und außerdem, dass im Anschluss an die Fertigstellung der ersten Speise ein Benutzer so wenig wie möglich tätig werden muss. Die Steuerungseinrichtung kann dann im Anschluss an eine solche Optimierung die Zubereitung der Speisen so steuern und einen oder mehrere Benutzer entsprechend anleiten, dass die eine Speise zu einem ersten Zeitpunkt und die andere Speise zu einem gewünscht späteren Zeitpunkt zubereitet wird. Nach der Fertigstellung der ersten Speise muss ein Benutzer nur noch minimiert tätig werden. Der Benutzer kann dann gemäß einer Prozessschritt-für-Prozessschritt - Anleitung zwei Speisen zu gewünschten unterschiedlichen Zeitpunkten fertigstellen.

Die Steuerungseinrichtung kann so eingerichtet sein, dass diese beispielsweise akustisch signalisieren kann, wenn ein Benutzer tätig werden muss.

Als Eingabeeinrichtung kann eine Tastatur vorgesehen sein. Als Eingabeeinrichtung kann ein Tastenfeld vorgesehen sein. Als Eingabeeinrichtung kann ein Mikrofon nebst einer Spracherkennung vorgesehen sein.

Die Optimierungseinrichtung ist in einer Ausgestaltung so eingerichtet, dass diese die Reihenfolge von Prozessschritten rückwärts berechnen kann. Damit ist gemeint, dass die Optimierungseinrichtung ihre Berechnungen mit einem gemäß einem Rezept vorgesehenen letzten Prozessschritt beginnt und von hier ausgehend eine Optimierung berechnet, so zum Beispiel eine kürzeste Zeitdauer. Entsprechendes gilt für zwei und mehr Rezepte. Diese Ausgestaltung ermöglicht es, dass ausgewählte Speisen zeitgleich fertiggestellt werden können. Mit zeitgleicher Fertigstellung ist nicht gemeint, dass zwei Speisen auf die Sekunde genau fertig gestellt werden können. Es genügt, wenn gemäß einer Prozessschritt-für-Prozessschrittanleitung die ausgewählten Speisen innerhalb einer Zeitspanne von wenigen Minuten fertiggestellt sind, so zum Beispiel innerhalb einer Zeitspanne von nicht mehr als fünf Minuten, vorzugsweise innerhalb von nicht mehr als drei Minuten, besonders bevorzugt innerhalb von einer Minute.

Durch das Rückwärtsrechnen ist es auch möglich, zwei verschiedene Speisen zu gewünschten unterschiedlichen Zeitpunkten fertigstellen zu können.

Die Optimierungseinrichtung ist in einer Ausgestaltung so eingerichtet, dass diese die Reihenfolge von Prozessschritten rückwärts berechnen und außerdem eine Zeit für die Fertigstellung von Speisen über eine Eingabevorrichtung eingegeben werden kann, so zum Beispiel 12:30 Uhr. Durch die Möglichkeit, rückwärts zu rechnen, kann die Optimierungseinrichtung dann auch berechnen, wann mit der Zubereitung der Speisen begonnen werden muss, damit um 12:30 Uhr die ein oder mehreren gewünschten Speisen fertiggestellt sind. Im Zusammenspiel mit der Steuereinrichtung kann ein Benutzer dann angeleitet werden, zu welchem Zeitpunkt mit der Zubereitung von Speisen begonnen werden muss.

Es kann in einer Ausgestaltung für eine erste Speise eine erste Uhrzeit ausgewählt sein und für eine zweite Speise eine zweite Uhrzeit. Es kann in einer Ausgestaltung für ein oder mehrere erste Speisen eine erste Uhrzeit ausgewählt sein und für ein oder mehrere zweite Speisen eine zweite Uhrzeit, usw..

Die elektronische Ressourcen - Speichereinrichtung kann eine Eingabeeinrichtung umfassen, durch die Zahl der Benutzer und/oder die zur Verfügung stehenden Küchengeräte für ein Speichern eingegeben werden können. Es kann also beispielsweise durch die Eingabeeinrichtung eingegeben werden, dass eine Küchenmaschine und ein Rührgerät zur Verfügung stehen. Im Anschluss an die Eingabe wird in der Ressourcen - Speichereinrichtung gespeichert, dass eine Küchenmaschine und ein Rührgerät vorhanden sind. Es kann durch die Eingabe beispielsweise eingegeben werden, wie viele Benutzer vorhanden sind. Im Anschluss an die Eingabe wird in der Ressourcen - Speichereinrichtung gespeichert, wie viele Benutzer vorhanden sind.

Die elektronische Ressourcen - Speichereinrichtung kann so eingerichtet sein, dass diese automatisiert vorhandene Küchengeräte erkennen und speichern kann. Vorhandene Küchengeräte können dann mit der Ressourcen - Speichereinrichtung entsprechend verbunden sein oder werden. Es kann sich um eine drahtlose Verbindung handeln, beispielsweise eine Bluetooth-Verbindung oder Wifi-Verbindung. Sobald beispielsweise eine Küchenmaschine mit der elektronischen Ressourcen - Speichereinrichtung verbunden wird, erkennt die Ressourcen - Speichereinrichtung dann, dass eine Küchenmaschine vorhanden ist und speichert diese Information ab.

Die elektronische Ressourcen - Speichereinrichtung kann so eingerichtet sein, dass diese automatisiert vorhandene Benutzer erkennen kann, so zum Beispiel mithilfe einer Kamera.

Die Optimierungseinrichtung kann so eingerichtet sein, dass diese beispielsweise die Geschwindigkeit, falls Geschwindigkeit das Optimierungsziel ist, für sämtliche Kombinationsmöglichkeiten der Reihenfolge der Prozessschritte berechnet, um schließlich so eine Reihenfolge von Prozessschritten zu finden, durch die ein vorgegebenes Optimierungsziel erreicht wird. Die Optimierungseinrichtung kann also so eingerichtet sein, dass diese für sämtliche Kombinationsmöglichkeiten die Zeit berechnet, die für die Fertigstellung von ausgewählten Speisen aufzuwenden ist. Im Anschluss daran kann die Optimierungseinrichtung die Kombinationsmöglichkeit identifizieren, für die die kürzeste Zeit benötigt wird.

Die Optimierungseinrichtung kann so eingerichtet sein, dass diese für sämtliche Kombinationsmöglichkeiten beispielsweise die Zahl der benötigten Küchengeräte berechnet, um schließlich so die Kombination mit der geringsten Zahl an benötigten Küchengeräten zu finden.

Kombinationsmöglichkeit meint eine Reihenfolge von Prozessschritten, die möglich ist. Ist ein zweiter Prozessschritt zwingend im Anschluss an einen ersten Prozessschritt durchzuführen und ist diese Information für das System gespeichert, dann ist die Durchführung des ersten Prozessschrittes zeitlich nach dem zweiten Prozessschritt keine Kombinationsmöglichkeit im Sinne der vorliegenden Erfindung, weil diese Reihenfolge der Prozessschritte nicht möglich ist.

Die Optimierungseinrichtung kann ein Optimierungsprogramm umfassen, welches mithilfe eines Algorithmus eine gesuchte optimale Kombination finden kann. Geeignete Optimierungsprogramme sind kommerziell erhältlich.

In einer Ausgestaltung enthält ein Rezept für einen Prozessschritt eine Information für das System, von welchem anderen Prozessschritt der Prozessschritt abhängig ist, wobei zwischen zumindest zwei verschiedenen Abhängigkeiten unterschieden wird. Es kann beispielsweise zwischen einer direkten und einer indirekten Abhängigkeit unterschieden werden.

Zwischen einem ersten und einem zweiten nachfolgenden Prozessschritt gibt es eine direkte Abhängigkeit, wenn der zweite Prozessschritt zeitlich unmittelbar nach dem ersten Prozessschritt mit demselben Küchengerät ausgeführt werden muss. Es ist dann nicht möglich, mit dem Küchengerät zunächst den ersten Prozessschritt auszuführen, im Anschluss daran einen dritten Prozessschritt und im Anschluss daran den zweiten Prozessschritt. Es ist auch nicht möglich, den zweiten Prozessschritt vor dem ersten Prozessschritt auszuführen.

Zwischen einem ersten und einem zweiten nachfolgenden Prozessschritt gibt es eine indirekte Abhängigkeit, wenn zwischen einem ersten und einem zweiten Prozessschritt ein dritter Prozessschritt durchgeführt werden kann, wobei der erste und der zweite Prozessschritt nicht mit demselben Küchengerät ausgeführt werden. Es ist wiederum nicht möglich, den zweiten Prozessschritt vor dem ersten Prozessschritt auszuführen.

Muss ein zweiter Prozessschritt zwingend unmittelbar im Anschluss an einen ersten Prozessschritt mit einem Küchengerät durchgeführt werden, so handelt es sich also um eine direkte Abhängigkeit. Ist diese Information für das System gespeichert, dann ist die Reihenfolge erster Prozessschritt, dritter Prozessschritt, zweiter Prozessschritt keine Reihenfolge, die möglich ist, wobei der dritte Prozessschritt ein Prozessschritt ist, der ebenfalls mit dem Küchengerät durchgeführt werden soll. Die Reihenfolge erster Prozessschritt, dritter Prozessschritt, zweiter Prozessschritt ist dann keine Kombinationsmöglichkeit, die die Optimierungseinrichtung berücksichtigen kann.

Muss ein zweiter Prozessschritt im Anschluss an die Durchführung eines ersten Prozessschritts durchgeführt werden und werden für beide Prozessschritte nicht dasselbe Küchengerät benötigt und kann zwischen dem ersten Prozessschritt und dem zweiten Prozessschritt ein dritter Prozessschritt durchgeführt werden, so handelt es sich also um eine indirekte Abhängigkeit. Ist diese Information für das System gespeichert, dann ist die Reihenfolge erster Prozessschritt, dritter Prozessschritt, zweiter Prozessschritt eine Reihenfolge, die möglich ist, und damit eine Kombinationsmöglichkeit, die die Optimierungseinrichtung berücksichtigen kann. Den zweiten Prozessschritt vor dem ersten Prozessschritt auszuführen ist dann keine Kombinationsmöglichkeit, die die Optimierungseinrichtung berücksichtigen kann.

Beispielsweise sollen Zwiebeln zerkleinert und gedünstet werden. Das manuelle Schälen der benötigten ein oder mehreren Zwiebeln ist dann ein erster Prozessschritt. Dieser Prozessschritt wird durch den Benutzer des Systems manuell durchgeführt. Der zweite Prozessschritt ist das Zugeben der geschälten Zwiebeln in das Gefäß der Küchenmaschine. Der zweite Prozessschritt hängt von dem ersten Prozessschritt ab, weil die Zwiebeln erst in das Gefäß gegeben werden können, nachdem die Zwiebeln geschält worden sind. Es handelt sich dabei um eine indirekte Abhängigkeit, weil es nach dem Schälen der Zwiebeln für einen Benutzer nicht sofort erforderlich ist, die Zwiebeln in das Gefäß der Küchenmaschine zu bringen. Stattdessen kann der Benutzer zwischen diesen beiden Prozessschritten einen dritten Prozessschritt durchführen, der eine manuelle Tätigkeit erfordert. Sind die geschälten Zwiebeln in das Gefäß gebracht worden, so muss die Gefäßöffnung mit einem Deckel verschlossen werden, um fortsetzen zu können. Das Auflegen eines Deckels ist dann ein dritter Prozessschritt, der von dem zweiten Prozessschritt abhängt. Es handelt sich um eine direkte Abhängigkeit, weil das Auflegen eines Deckels unmittelbar nach dem Einfüllen der geschälten Zwiebeln erfolgen muss und die Küchenmaschine in der Zwischenzeit nicht auf andere Weise genutzt werden kann. Ein vierter Prozessschritt ist dann das Zerkleinern der Zwiebeln durch die Küchenmaschine. Gemäß dem vierten Prozessschritt kann vorgesehen sein, die Zwiebeln 3 Sekunden lang auf Stufe 5 zu zerkleinern. Der vierte Prozessschritt hängt von dem dritten Prozessschritt ab. Es handelt sich wiederum um eine direkte Abhängigkeit, da dieselbe Küchenmaschine verwendet wird und die Küchenmaschine zwischen dem dritten und dem vierten Prozessschritt nicht für die Durchführung eines anderen Prozessschrittes eingesetzt werden kann. Der fünfte Prozessschritt ist die Zugabe von zwei Esslöffeln Öl in das Gefäß. Im Fall der Küchenmaschine Thermomix® TM 6 muss dafür der Deckel nicht entfernt werden, da der Deckel über eine Öffnung verfügt, über die Öl zugegeben werden kann. Der fünfte Prozessschritt hängt von dem vierten Prozessschritt ab. Es handelt sich wiederum um eine direkte Abhängigkeit, da beide Prozessschritte durch dieselbe Küchenmaschine durchgeführt werden und es für die Küchenmaschine nicht möglich ist, dazwischen einen anderen Prozessschritt auszuführen. Der sechste Prozessschritt besteht in dem Erhitzen des Gefäßes. Gemäß dem sechsten Prozessschritt kann vorgesehen sein, drei Minuten lang das Gefäß auf 100°C zu erhitzen und dabei mit der Drehgeschwindigkeit der Stufe 1 das Rührwerkzeug zu drehen. Der sechste Prozessschritt hängt von dem fünften Prozessschritt ab. Da zwischen diesen beiden Prozessschritten die Küchenmaschine nicht anderweitig benutzt werden kann und für beide Prozessschritte dieselbe Küchenmaschine eingesetzt werden soll, handelt es sich wiederum um eine direkte Abhängigkeit.

Eine äußere und eine direkte Abhängigkeit kann in dem System beispielsweise durch eine Zahl wiedergegeben sein. So kann mit einer "1" eine indirekte Abhängigkeit bezeichnet sein und mit einer "2" eine direkte Abhängigkeit.

Wenn für die Ausführung eines Prozessschritts aus mehreren, in der Ressourcen - Speichereinrichtung gespeicherten Küchengeräten ausgewählt werden kann, mit denen der Prozessschritt ausgeführt werden kann, dann kann in einer Ausgestaltung der Erfindung wie bereits beschrieben eine Kombinationsmöglichkeit sich von einer anderen Kombinationsmöglichkeit dadurch unterscheiden, dass bei der ersten Kombinationsmöglichkeit die Ausführung des Prozessschritts mit einem ersten Küchengerät vorgesehen wird und bei der zweiten Kombinationsmöglichkeit die Ausführung des Prozessschritts mit einem zweiten Küchengerät vorgesehen wird. Ein Küchengerät kann dann mittels der Optimierungseinrichtung ausgewählt werden. Alternativ oder ergänzend umfasst das System eine Auswahleinrichtung, die so eingerichtet ist, dass diese aus in der Ressourcen - Speichereinrichtung gespeicherten Küchengeräten ein Küchengerät automatisiert anhand von zumindest einem Auswahlkriterium auswählt, wenn ein Prozessschritt mit verschiedenen, in der Ressourcen - Speichereinrichtung gespeicherten Küchengeräten ausgeführt werden kann.

Als Auswahlkriterium kann vorgesehen sein, dass aus in der Ressourcen - Speichereinrichtung gespeicherten Küchengeräten, mit denen ein Prozessschritt ausgeführt werden kann, das Küchengerät ausgewählt wird, welches bereits in einem vorhergehenden Prozessschritt verwendet worden ist. Beispielsweise stehen eine Küchenmaschine und ein Rührgerät zur Verfügung. Küchenmaschine und Rührgerät sind daher in der Ressourcen - Speichereinrichtung gespeichert. Gemäß einem ersten Prozessschritt ist eine erste Zutat einer Speise durch die Küchenmaschine zerkleinert worden. Es soll nun diese erste zerkleinerte Zutat mit einer zweiten Zutat gerührt werden. Für das Rühren stehen nun zwei Küchengeräte zur Auswahl und zwar die Küchenmaschine und das Rührgerät. Es besteht damit Bedarf, für das Rühren aus den beiden Möglichkeiten auszuwählen, also entweder die Küchenmaschine oder das Rührgerät. Da die Küchenmaschine bereits im vorhergehenden Prozessschritt verwendet worden ist, wählt die Auswahleinrichtung die Küchenmaschine für das Rühren der ersten und der zweiten Zutat aus.

Als Auswahlkriterium kann vorgesehen sein, dass aus in der Ressourcen - Speichereinrichtung gespeicherten Küchengeräten, mit denen ein Prozessschritt ausgeführt werden kann, das Küchengerät ausgewählt wird, welches bereits in einem vorhergehenden Prozessschritt verwendet worden ist, wenn eine direkte Abhängigkeit zwischen dem Prozessschritt und dem vorhergehenden Prozessschritt besteht. Im vorgenannten Beispiel gibt es eine direkte Abhängigkeit zwischen dem Prozessschritt "Rühren der ersten und der zweiten Zutat" und dem vorhergehenden Prozessschritt "Zerkleinern der ersten Zutat". Daher wählt die Auswahleinrichtung die Küchenmaschine aus.

Als Auswahlkriterium kann vorgesehen sein, dass aus in der Ressourcen - Speichereinrichtung gespeicherten Küchengeräten, mit denen ein Prozessschritt ausgeführt werden kann, das Küchengerät ausgewählt wird, welches bereits in einem vorhergehenden Prozessschritt verwendet worden ist, wenn eine direkte Abhängigkeit zwischen dem Prozessschritt und dem vorhergehenden Prozessschritt besteht und der Prozessschritt schnell ausgeführt werden kann. "Schnell ausgeführt werden kann" meint, dass es eine vorgegebene Zeitspanne gibt, innerhalb der der Prozessschritt vollständig ausgeführt werden kann. Als kurze Zeitspanne können beispielsweise 30 Sekunden, 60 Sekunden oder 120 Sekunden vorgesehen sein. Als Zeitspanne kann ein Wert zwischen 30 Sekunden und 120 Sekunden vorgesehen sein. Im vorgenannten Beispiel sollen beispielsweise erste und zweite Zutat lediglich 10 Sekunden lang gerührt werden. Daher wählt die Auswahleinrichtung die Küchenmaschine aus.

Als Auswahlkriterium kann vorgesehen sein, dass aus in der Ressourcen - Speichereinrichtung gespeicherten Küchengeräten, mit denen ein Prozessschritt ausgeführt werden kann, nicht das Küchengerät ausgewählt wird, welches bereits in einem vorhergehenden Prozessschritt verwendet worden ist, wenn der Prozessschritt nur langsam ausgeführt werden kann, also relativ viel Zeit für seine Ausführung benötigt wird, sondern dann das andere Küchengerät. Im vorgenannten Beispiel sollen beispielsweise erste und zweite Zutat 10 Minuten lang gerührt werden. Daher wählt die Auswahleinrichtung das Rührgerät aus.

Als Auswahlkriterium kann vorgesehen sein, dass aus in der Ressourcen - Speichereinrichtung gespeicherten Küchengeräten, mit denen ein Prozessschritt ausgeführt werden kann, nicht das Küchengerät ausgewählt wird, welches bereits in einem vorhergehenden Prozessschritt verwendet worden ist, wenn der Prozessschritt nur langsam ausgeführt werden kann, also relativ viel Zeit für seine Ausführung benötigt wird, und das andere Küchengerät einen geringeren Funktionsumfang aufweist. Dann wählt die Auswahleinrichtung das andere Küchengerät aus.

Ein Küchengerät weist einen geringeren Funktionsumfang auf als ein anderes Küchengerät, wenn mit diesem weniger verschiedene Prozessschritten ausgeführt werden können im Vergleich zu den verschiedenen Prozessschritten, die mit dem anderen Küchengerät ausgeführt werden können.

Im vorgenannten Beispiel sollen beispielsweise eine erste und eine zweite Zutat zehn Minuten lang gerührt werden. Mit dem Rührgerät kann nur gerührt werden. Daher können mit dem Rührgerät nur Prozessschritte durchgeführt werden, bei denen Zutaten gerührt werden sollen. Mit der Küchenmaschine kann ebenfalls gerührt werden. Daher können mit der Küchenmaschine sämtliche Prozessschritte ausgeführt werden, bei denen Zutaten gerührt werden sollen. Die Küchenmaschine kann aber beispielsweise auch Zutaten zerkleinern oder Teig kneten. Daher können mit der Küchenmaschine außerdem Prozessschritte ausgeführt werden, bei denen Zutaten zerkleinert werden sollen bzw. Teig geknetet werden soll. Damit weist die Küchenmaschine den größeren Funktionsumfang auf. Daher wählt die Auswahleinrichtung beim vorgenannten Beispiel nun das Rührgerät aus.

Als Auswahlkriterium kann vorgesehen sein, dass aus in der Ressourcen - Speichereinrichtung gespeicherten Küchengeräten, mit denen ein Prozessschritt ausgeführt werden kann, das Küchengerät ausgewählt wird, welches bereits in einem vorhergehenden Prozessschritt verwendet worden ist, wenn das andere Küchengerät einen größeren Funktionsumfang aufweist. Beispielsweise hat das Rührgerät im Rahmen eines Prozessschrittes eine erste und eine zweite Zutat zehn Minuten lang gerührt. Es soll nun noch eine dritte Zutat hinzugefügt und anschließend weitere 180 Sekunden gerührt werden. Das andere Küchengerät sei eine Küchenmaschine. Die Auswahleinrichtung wählt nun das Rührgerät aus, um den Prozessschritt "180 Sekunden langes Rühren der drei Zutaten" auszuführen.

Es sind eine Vielzahl von Rezepten bekannt, so zum Beispiel die eingangs erwähnten Thermomix® - Rezepte, die an die Küchenmaschine Thermomix® TM6 angepasst sind, also u. a. genaue Informationen dazu enthalten, welche Einstellungen bei der Küchenmaschine Thermomix® TM6 jeweils vorzunehmen sind, damit selbst ein ungeübter Benutzer eine Speise reproduzierbar herstellen kann. Es ist wünschenswert, solche Rezepte mit Informationen zu vervollständigen, um diese erfindungsgemäß einsetzen zu können. Um das Vervollständigen zumindest teilweise automatisiert durchzuführen, wird bei Bedarf zunächst eine Texterkennung mit einer Texterkennungseinrichtung durchgeführt, so dass der Text eines Rezepts von einer Analyseeinrichtung analysiert werden kann. Die Analyseeinrichtung kann die Texterkennungseinrichtung umfassen.

Die Analyseeinrichtung kann so eingerichtet sein, dass diese ein Rezept in Module unterteilen kann. Ein Modul beginnt, wenn ein Küchengerät laut Rezept erstmals eingesetzt werden soll. Ein Modul endet, wenn das Küchengerät nicht mehr eingesetzt werden soll. Eine Änderung eines Küchengeräts hat also ein Ende eines vorhergehenden Moduls zur Folge und den Beginn eines neuen Moduls.

Die Analyseeinrichtung kann so eingerichtet sein, dass diese Abhängigkeiten automatisiert erkennen kann und eine entsprechende Information dem Rezept hinzufügen kann. Um Abhängigkeiten automatisiert zu erkennen, kann es eine in der Analyseeinrichtung gespeicherte Liste von erlaubten Wörtern und/oder von verbotenen Wörtern geben. Die Analyseeinrichtung kann so eingerichtet sein, dass diese ein Rezept nach Wörtern durchsuchen kann, so zum Beispiel nach dem Wort "Gemüsebrühe", um Abhängigkeiten zu erkennen.

Wird das Wort "Gemüsebrühe" in zwei aufeinanderfolgenden Prozessschritten verwendet und handelt es sich bei dem Wort "Gemüsebrühe" um kein verbotenes Wort und sind die beiden Prozessschritte für das gleiche Küchengerät vorgesehen, so vergibt die Analyseeinrichtung beispielsweise eine "2", umso zu kennzeichnen, dass eine direkte Abhängigkeit vorliegt.

Wird das Wort "Gemüsebrühe" in zwei aufeinanderfolgenden Prozessschritten verwendet und handelt es sich bei dem Wort "Gemüsebrühe" um kein verbotenes Wort und sind die beiden Prozessschritte nicht für das gleiche Küchengerät vorgesehen, so vergibt die Analyseeinrichtung beispielsweise eine "1", umso zu kennzeichnen, dass eine indirekte Abhängigkeit vorliegt.

Die Analyseeinrichtung kann so eingerichtet sein, dass diese Abhängigkeiten zwischen Prozessschritten eines Moduls immer als direkte Abhängigkeit, beispielsweise durch Vergabe einer "2", kennzeichnet.

Es können verbotene Wörter vorgesehen sein, da es Zutaten gibt, die derart häufig eingesetzt werden, dass aus einer wiederholten Verwendung eines entsprechenden Wortes nicht auf eine Abhängigkeit geschlossen werden kann. So kann beispielsweise das Wort "Zwiebel" ein verbotenes Wort sein.

Die vorliegende Erfindung betrifft auch eine Analysevorrichtung, wie diese zuvor beschrieben worden ist.

Zur Lösung der Aufgabe ist auch ein System mit zumindest zwei Küchengeräten und einer Steuereinrichtung für die Zubereitung von zumindest zwei Speisen vorgesehen. Die Steuereinrichtung ist so eingerichtet, dass durch eine Prozessschritt-für-Prozessschritt - Anleitung beide Speisen unter Einsatz einer Mehrzahl von Küchengeräten zubereitet werden können. Die Prozessschritt-für-Prozessschritt - Anleitung ist so, dass Prozessschritte für die Zubereitung der einen Speise mit Prozessschritten für die Zubereitung der anderen Speise gemischt sind. Es sollen also nicht erst die Prozessschritte für die eine Speise und im Anschluss daran die Prozessschritte für die anderen Speise durchgeführt werden. Die Reihenfolge der Prozessschritte ist so, dass dadurch ein vorgegebenes Optimierungsziel erreicht werden kann. Ein solches System kann mit Hilfe einer Optimierungseinrichtung bereitgestellt worden sein. Im Anschluss daran ist es nicht mehr zwingend erforderlich, dass beispielsweise die Optimierungseinrichtung Teil des Systems ist.

Die Reihenfolge der Prozessschritte kann bei dem System so sein, dass beide Speisen zeitgleich fertiggestellt werden. Die Reihenfolge der Prozessschritte kann bei dem System alternativ oder ergänzend so sein, dass möglichst schnell beide Speisen zubereitet werden können. Die Reihenfolge der Prozessschritte kann bei dem System so sein, dass eine erste Speise zu einem gewünschten ersten Zeitpunkt und eine zweite Speise zu einem gewünschten späteren Zeitpunkt fertiggestellt wird.

Zur Lösung der Aufgabe dient auch ein Verfahren für ein Herstellen von ein oder mehreren Speisen gemäß einer Prozessschritt-für-Prozessschritt - Anleitung.

Nachfolgend wird die Erfindung näher erläutert. Es zeigen
- Figur 1:: schematische Darstellung einer Küchenmaschine;
- Figur 2:: schematische Darstellung von anderen Küchengeräten;
- Figur 3:: schematische Darstellung eines Computers.

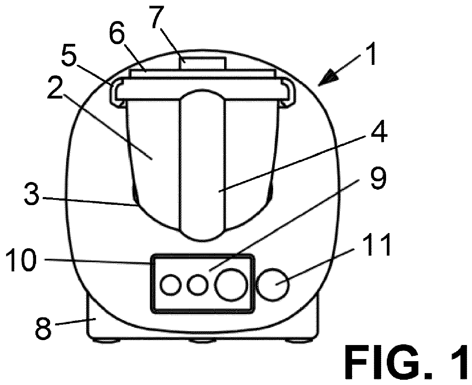

Die Figur 1 zeigt eine Küchenmaschine 1, die Teil des erfindungsgemäßen Systems sein kann. Die Küchenmaschine 1 umfasst als Speisenzubereitungsraum ein Gefäß 2, welches in eine Halterung 3 der Küchenmaschine 1 eingesetzt ist. Das Gefäß 2 umfasst einen Griff 4, um das Gefäß 2 aus der Halterung 3 leicht entfernen zu können. Die Küchenmaschine 1 umfasst einen Schließmechanismus mit schwenkbar gelagerten Armen 5. In der in der Figur 1 gezeigten Schließstellung umschließen die Arme 5 einen Deckel 6. Dadurch ist der Deckel 6 dann fest mit dem Gefäß 2 verbunden. Der Deckel 6 umfasst eine Öffnung, in welches ein zum Beispiel transparentes Gefäß 7 eingesetzt ist. Durch das Gefäß 7 ist die Öffnung in dem Deckel 6 verschlossen. Das Gefäß 7 kann jederzeit von der Öffnung abgehoben werden, sodass dann eine Öffnung bereitstellt ist, durch die hindurch eine Zutat in das Gefäß 2 eingefüllt werden kann. Das Gefäß 7 kann als Dosierhilfe dienen. Wird der Schließmechanismus geöffnet, dann kann der Deckel 6 vom Gefäß 2 entfernt werden. Die Küchenmaschine 1 umfasst für ein Aufstellen ein Fußteil 8.

Eine Benutzeroberfläche 9 wird auf einem Bildschirm 10 dargestellt. Der Bildschirm 10 ist vorzugsweise berührungsempfindlich, um beispielsweise Betriebsparameter durch Berühren des Bildschirms einstellen zu können. Die Küchenmaschine kann zusätzlich beispielsweise einen Drehregler 11 umfassen, der ebenfalls dazu dienen kann, im Zusammenspiel mit der Benutzeroberfläche 9 ein oder mehrere Betriebsparameter einstellen zu können. Bezieht sich die Benutzeroberfläche 9 beispielsweise auf eine Rühr- und Schneideinrichtung der Küchenmaschine 1, so kann mit dem Drehregler 11 beispielsweise eine Drehgeschwindigkeit eingestellt werden. Bezieht sich die Benutzeroberfläche 9 beispielsweise auf ein Erwärmen oder Erhitzen des Gefäßes 2 der Küchenmaschine 1, so kann der Drehregler 11 beispielsweise dazu dienen, um eine gewünschte Temperatur einzustellen. Anstelle eines Drehreglers 11 kann aber beispielsweise auch ein Schieberegler vorgesehen sein, bei dem also durch eine Schiebbewegung Betriebsparameter wie Temperatur, Rührgeschwindigkeit oder eine Zeitdauer eingestellt werden können. Temperatur, Rührgeschwindigkeit oder Zeitdauer können aber auch in einer Ausgestaltung numerisch eingegeben werden. Ein Drehregler 11 ist allerdings zu bevorzugen, da große Bereiche sehr einfach eingestellt werden können, ohne dafür übermäßig viel Platz bereitstellen zu müssen. Der Drehregler 11 kann alternativ oder ergänzend als Taster ausgestaltet sein. Unter einem Taster ist zu verstehen, dass dieser gedrückt werden kann, um eine Aktion auszulösen, so zum Beispiel einen Start einer Zubereitung von ein oder mehreren Speisen.

Die in der Figur 1 gezeigte Küchenmaschine 1 kann eine Schnittstelle für einen Austausch von elektronischen Daten umfassen. Es kann sich um eine drahtlose Schnittstelle handeln. Durch die Schnittstelle kann die Küchenmaschine 1 mit einem anderen Küchengerät und/oder mit einem Computer verbunden sein, der räumlich von der Küchenmaschine 1 getrennt ist.

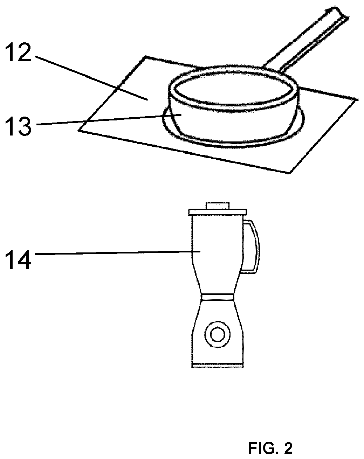

Das System kann ein oder mehrere der in der Figur 2 gezeigten weiteren Haushaltsgeräte umfassen und zwar ein Kochfeld 12 mit einer Pfanne 13 als ein Haushaltsgerät und ein Rührgerät 14 als ein anderes Haushaltsgerät. Beide Küchengeräte können eine Schnittstelle umfassen, über die elektronische Daten ausgetauscht werden können, so zum Beispiel untereinander, mit der Küchenmaschine 1 und/oder mit einem externen Computer, der räumlich von den Küchengeräten getrennt sein kann.

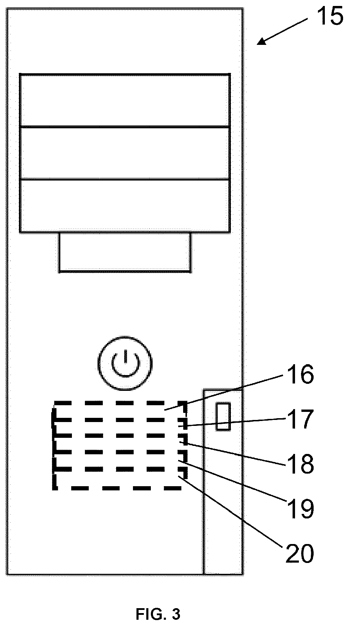

In der Figur 3 werden schematisch Einrichtungen eines Computers 15 gezeigt und zwar:
eine elektronische Ressourcen - Speichereinrichtung 16, in der eine Liste mit den Küchengeräten 1, 12, 13, 14 gespeichert ist;
eine Rezept - Speichereinrichtung 17, mit einer Vielzahl von darin gespeicherten Rezepten für die Zubereitung von Speisen;
eine Optimierungseinrichtung 18, die so eingerichtet ist, dass diese die Zubereitung von ein oder mehreren Speisen optimiert und zwar unter Berücksichtigung von Informationen für das System, die ein Rezept umfasst;
eine Steuereinrichtung 19 für eine Zubereitung von ein oder mehreren Speisen gemäß einer durch die Optimierungseinrichtung optimierten Prozessschrittreihenfolge;
eine Auswahleinrichtung 20, die so eingerichtet ist, dass die Auswahleinrichtung aus in der Ressourcen - Speichereinrichtung gespeicherten, möglichen Küchengeräten automatisiert anhand von zumindest einem Auswahlkriterium auswählt, wenn ein Prozessschritt mit verschiedenen, in der Ressourcen - Speichereinrichtung gespeicherten Küchengeräten ausgeführt werden kann.

Ein so aufgebauter Computer 15 kann in einem der Küchengeräte 1, 12, 13, 14 integriert sein. Der Computer 15 kann räumlich von den Küchengeräten 1, 12, 13, 14 getrennt und über eine Schnittstelle mit den Küchengeräten 1, 12, 13, 14 verbunden sein, sodass elektronisch Daten ausgetauscht werden können. Der Computer 15 kann aber auch nur ein Teil der in der Figur 3 gezeigten Einrichtungen 16, 17, 18, 19, 20 aufweisen. Einrichtungen, die beim Computer 15 nicht vorhanden sind, können dann beispielsweise bei einem der anderen Küchengeräte vorhanden sein. So kann beispielsweise bei dem Computer 15 die Steuereinrichtung 19 fehlen. Stattdessen kann die Steuereinrichtung 19 beispielsweise in die Küchenmaschine 1 integriert sein.

Der Computer 15 und/oder ein Küchengerät 1, 12, 13, 14 können eine Eingabeeinrichtung aufweisen.

## Patentansprüche

1. System mit
zumindest zwei Küchengeräten (1, 12, 13, 14);
einer elektronische Ressourcen - Speichereinrichtung (16) für ein Speichern einer Liste mit Küchengeräten, die das System umfasst, und/oder für ein Speichern der Zahl der Benutzer, die für eine Zubereitung von ein oder mehreren Speisen zur Verfügung stehen;
einer Rezept - Speichereinrichtung (17) für ein Speichern eines Rezeptes für die Zubereitung einer Speise;
einer Optimierungseinrichtung (18), die so eingerichtet ist, dass diese die Zubereitung von ein oder mehreren Speisen optimiert und zwar unter Berücksichtigung von Informationen für das System, die ein Rezept umfasst; einer Steuereinrichtung (19) für eine Zubereitung von ein oder mehreren Speisen gemäß einer durch die Optimierungseinrichtung optimierten Prozessschrittreihenfolge.

2. System nach dem vorhergehenden Anspruch, **dadurch gekennzeichnet, dass** zumindest ein Rezept in der Rezept - Speichereinrichtung (17) gespeichert ist und das Rezept in eine Mehrzahl von Prozessschritten unterteilt ist, wobei das Rezept für jeden Prozessschritt Informationen für das System enthält.

3. System nach dem vorhergehenden Anspruch, **dadurch gekennzeichnet, dass** Informationen ausgewählt sind aus:
• Zeitangabe für einen Prozessschritt;
• für die Durchführung eines Prozessschritts benötigtes Küchengerät (1, 12, 13, 14) und/oder für die Durchführung eines Prozessschritts benötigter Benutzer;
• Abhängigkeit zwischen zwei Prozessschritten.

4. System nach dem vorhergehenden Anspruch, **dadurch gekennzeichnet, dass** ein Rezept als Information Abhängigkeiten zwischen Prozessschritten umfasst und zwischen zwei verschiedenen Abhängigkeiten unterschieden wird.

5. System nach dem vorhergehenden Anspruch, **dadurch gekennzeichnet, dass** zwischen einer direkten und einer indirekten Abhängigkeit unterschieden wird.

6. System nach einem der vorhergehenden Ansprüche, **dadurch gekennzeichnet, dass** die Optimierungseinrichtung (18) eine Eingabeeinrichtung umfasst, durch die ein gewünschtes Optimierungsziel eingegeben werden kann.

7. System nach einem der vorhergehenden Ansprüche, **dadurch gekennzeichnet, dass** das System eine Auswahleinrichtung (20) umfasst, die so eingerichtet ist, dass die Auswahleinrichtung aus in der Ressourcen - Speichereinrichtung (16) gespeicherten, möglichen Küchengeräten (1, 12, 13, 14) automatisiert anhand von zumindest einem Auswahlkriterium auswählt, wenn ein Prozessschritt mit verschiedenen, in der Ressourcen - Speichereinrichtung gespeicherten Küchengeräten (1, 12, 13, 14) ausgeführt werden kann.

8. System nach dem vorhergehenden Anspruch, **dadurch gekennzeichnet, dass** das Auswahlkriterium eines der folgenden Auswahlkriterien ist:
• aus in der Ressourcen - Speichereinrichtung gespeicherten Küchengeräten, mit denen ein Prozessschritt ausgeführt werden kann, wird das Küchengerät ausgewählt, welches bereits in einem vorhergehenden Prozessschritt verwendet worden ist;
• aus in der Ressourcen - Speichereinrichtung gespeicherten Küchengeräten, mit denen ein Prozessschritt ausgeführt werden kann, wird das Küchengerät ausgewählt, welches bereits in einem vorhergehenden Prozessschritt verwendet worden ist, wenn eine direkte Abhängigkeit zwischen dem Prozessschritt und dem vorhergehenden Prozessschritt besteht;
• aus in der Ressourcen - Speichereinrichtung gespeicherten Küchengeräten, mit denen ein Prozessschritt ausgeführt werden kann, wird das Küchengerät ausgewählt, welches bereits in einem vorhergehenden Prozessschritt verwendet worden ist, wenn eine direkte Abhängigkeit zwischen dem Prozessschritt und dem vorhergehenden Prozessschritt besteht und der Prozessschritt schnell ausgeführt werden kann;
• aus in der Ressourcen - Speichereinrichtung gespeicherten Küchengeräten, mit denen ein Prozessschritt ausgeführt werden kann, wird nicht das Küchengerät ausgewählt wird, welches bereits in einem vorhergehenden Prozessschritt verwendet worden ist, wenn der Prozessschritt nur langsam ausgeführt werden kann, sondern es wird dann das andere Küchengerät ausgeführt;
• aus in der Ressourcen - Speichereinrichtung gespeicherten Küchengeräten, mit denen ein Prozessschritt ausgeführt werden kann, wird nicht das Küchengerät ausgewählt, welches bereits in einem vorhergehenden Prozessschritt verwendet worden ist, wenn der Prozessschritt nur langsam ausgeführt werden kann, und das andere Küchengerät einen geringeren Funktionsumfang aufweist, sondern es wird dann das andere Küchengerät ausgewählt.

9. System nach einem der vorhergehenden Ansprüche, **dadurch gekennzeichnet, dass** die Optimierungseinrichtung so eingerichtet ist, dass diese die Reihenfolge von Prozessschritten rückwärts berechnen kann.

10. System nach einem der vorhergehenden Ansprüche, **dadurch gekennzeichnet, dass** das System eine Küchenmaschine (1) und ein Rührgerät (14) umfasst und die Küchenmaschine (1) ein Gefäß (2), ein Rühr- und Schneidwerkzeug im Gefäß (2), eine Heizeinrichtung für das Gefäß und/oder eine Waage umfasst.

11. System insbesondere nach einem der vorhergehenden Ansprüche mit zumindest zwei Küchengeräten (1, 12, 13, 14) und einer Steuereinrichtung (19) für die Zubereitung von zumindest zwei Speisen, wobei die Steuereinrichtung (19) so eingerichtet ist, dass durch eine Prozessschritt-für-Prozessschritt - Anleitung beide Speisen unter Einsatz einer Mehrzahl von Küchengeräten (1, 12, 13, 14) zubereitet werden können, wobei die Prozessschritt-für-Prozessschritt - Anleitung so ist, dass Prozessschritte für die Zubereitung der einen Speise mit Prozessschritten für die Zubereitung der anderen Speise gemischt sind, und die Reihenfolge der Prozessschritte so ist, dass dadurch ein vorgegebenes Optimierungsziel erreicht werden kann.

12. System nach dem vorhergehenden Anspruch, **dadurch gekennzeichnet, dass** das System eine Küchenmaschine (1) und ein Rührgerät (14) umfasst, und gemäß der Prozessschritt-für-Prozessschritt - Anleitung das Rührgerät (14) nur dann eingesetzt werden soll, wenn länger als eine vorgegebene Zeitspanne gerührt werden muss.

13. System nach einem der beiden vorhergehenden Ansprüche, **dadurch gekennzeichnet, dass** die beiden Prozessschritt-für-Prozessschritt - Anleitung so sind, dass beide Speisen zeitgleich fertiggestellt werden.

14. System nach dem vorhergehenden Anspruch, **dadurch gekennzeichnet, dass** die Küchenmaschine ein Gefäß mit einem darin befindlichen Rühr- und Schneidwerkzeug mit einer stumpfen Kante und einer gegenüberliegen scharfen Kante umfasst, eine Heizeinrichtung für das Gefäß und eine Waage, mit der das Gewicht einer Zutat in dem Gefäß gemessen werden kann und/oder dass die Rühreinrichtung ein Rühr- und Schneidwerkzeug mit einer stumpfen Kante und einer gegenüberliegen scharfen Kante umfasst und das Rührgerät das Rühr- und Schneidwerkzeug nur in Richtung der stumpfen Kante drehen kann.

15. Verfahren zur Zubereitung von zumindest einer Speise mit einem System nach einem der vorgehenden Ansprüche, **dadurch gekennzeichnet, dass** die zumindest eine Speise gemäß einer Prozessschritt-für-ProzessschrittAnleitung hergestellt wird.
